(19)

Europäisches Patentamt

European Patent Office

Office européen des brevets

(11) **EP 3 474 232 A1**

(12) **EUROPEAN PATENT APPLICATION**

(43) Date of publication:
24.04.2019 Bulletin 2019/17

(21) Application number: 17306424.7

(22) Date of filing: 19.10.2017

(51) Int Cl.:
*G06T 9/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
- **RICARD, Julien**
  **35576 CESSON-SÉVIGNÉ (FR)**
- **GUEDE, Céline**
  **35576 CESSON-SÉVIGNÉ (FR)**
- **CAI, Kangying**
  **35576 CESSON-SÉVIGNÉ (FR)**

(74) Representative: **Amor, Rim et al**
**InterDigital CE Patent Holdings**
**20, rue Rouget de Lisle**
**92130 Issy-les-Moulineaux (FR)**

(54) **A METHOD AND DEVICE FOR ENCODING AND DECODING A ROTATION 2D/3D MATRIX**

(57) The present invention concerns a method for encoding a rotation matrix comprising the step of:
- associating (S1) an integer value with each of a number N of trigonometric function values, each trigonometric function value being associated with an angle value,
- determining (S2) at least one trigonometric function value representing said rotation matrix,
- determining (S3) at least one of said integer values to be associated with said at least one trigonometric function value representing said rotation matrix,
- encoding (S4) said at least one integer value in order to generate a bitstream.

Fig. 1

**Description**

**1. Technical field of the disclosure**

The present disclosure is mainly in the field of encoding/decoding of 2D/3D signals. The disclosure may be used in any fields where the fast and accurate reconstruction of a 2D/3D rotation matrix is required, such as computer games.

**2. Background of the disclosure**

Rotation transformation in Euclidean space is a geometric transformation widely used to describe the motion of objects. It is a powerful tool in many applications such as sketch image compression, point cloud compression and 3D mesh compression. Instead of rotation angles and rotation axes, rotation transformation is often represented by a rotation matrix. For example, the result of aligning two sets of 3D points is a 4x4 matrix whose left top 3x3 submatrix is a rotation matrix. For applications which are sensitive to both storage cost and computational complexity, such as a decoder of sketch images, point clouds or 3D meshes, an efficient representation of a rotation matrix, which requires minimum bits and enables fast and accurate reconstruction of a rotation transformation, is required.

A rotation transformation can be represented by a 2x2 (for 2D rotation) or 3x3 (for 3D rotation) matrix. In the prior art works, the encoding of a rotation matrix is carried out by

- firstly, determining a plurality of trigonometric function values from the rotation matrix,
- secondly, determining a plurality of real number angles in radians or degrees associated with said several trigonometric function values,
- thirdly, determining a plurality of integer number information representatives of angles from said real number angles in radians, and
- fourthly, encoding entropically said plurality of integer number information representative of angles into a bitstream.

Correspondingly, the decoding of a rotation transformation is carried out by

- firstly, decoding entropically a plurality of integer number information representative of angles from a bitstream,
- secondly, determining a plurality of real number angles in radians or degrees from said plurality of integer number information representatives of angles,
- thirdly, determining a plurality of trigonometric function values from said plurality of real number angles in radians or in degrees,
- fourthly, determining a reconstructed rotation matrix from said plurality of trigonometric values.

In the compression scheme of rotation matrix described above, the calculation of inverse trigonometric functions, such as $tan^{-1}$ and $sin^{-1}$, and trigonometric functions, such as sine and cosine, is involved in encoding and decoding of a rotation matrix.

This compression scheme presents some drawbacks because of the conversion from trigonometric function values to angles during encoding and the conversion from angles to trigonometric values during decoding. The main drawbacks are the following ones:

- a precision loss caused by the conversion procedure of first from trigonometric function values to angles and then from angles to trigonometric function values, and
- a high computational complexity and the requirement of high-end hardware at the decoder side, caused by the involvement of the calculation of trigonometric functions.

**3. Summary of the disclosure**

A purpose of the disclosure is to overcome at least partly the above-mentioned drawbacks.

The present disclosure proposes to build at least one look-up table wherein trigonometric function values are associated with integer indices and to encode/decode these integer values.

By using a trigonometric function value look-up table (LUT hereafter) and describing a rotation matrix using the index/indices of the trigonometric function value LUT, the conversion between trigonometric function values and angles can be totally avoided. Then, both the two above mentioned drawbacks can be overcome.

The present disclosure relates to a method or a device for encoding a rotation matrix comprising the step of or the means for:

- determining at least one trigonometric function value representing said rotation matrix,
- associating an integer value with at least one of a number N of trigonometric function values by at least a look-up table, each trigonometric function value being associated with an angle value,
- determining at least one of said integer value to be associated with said at least one trigonometric function value representing said rotation matrix,
- encoding said at least one integer value in order to generate a bitstream.

According to an embodiment, the step of associating an integer value with at least one of a number N of trigonometric function values comprises building a look-up table associating an integer value with at least one of N trigonometric function values being determined for N angle values in a first range smaller than [0°;360°].

According to an embodiment, the first range is [0°;90°].

According to an embodiment, the number of integer values and associated trigonometric function values from the look-up table is increased by interpolation, for example by linear interpolation.

According to an embodiment, said N trigonometric function values are obtained by uniformly sampling said first range according to a sampling step.

In a variant, said N trigonometric function values are obtained by non-uniformly sampling said first range according to at least two sampling steps.

According to an embodiment, a first sampling step is used in a first sub-range of the first range and a second sampling step is used in a second sub-range of the first range.

According to an embodiment, said N trigonometric function values are sine values.

In a variant, said N trigonometric function values are cosine values.

According to an embodiment, the rotation matrix is a 2D rotation matrix.

According to an embodiment, said at least one trigonometric function value representing the 2D rotation matrix is a trigonometric function value of a rotation angle about a rotation axis perpendicular to one 2D plane.

According to an embodiment, the rotation matrix is a 3D rotation matrix.

According to an embodiment, if the rotation matrix is a 3D rotation matrix, the trigonometric function values representing the rotation matrix are determined through conversion of the 3D rotation matrix to Euler angles.

According to an embodiment, the trigonometric function values representing the 3D rotation matrix are the trigonometric function values of 3 Euler angles.

In a variant, the trigonometric function values representing the 3D rotation matrix are determined through conversion of the 3D rotation matrix to a quaternion.

According to an embodiment, the step of determining at least one integer value from said look-up-table associated with said at least one trigonometric function value representing the rotation matrix comprises associating an integer value from the look-up table with each couple (sin $\delta$, cos $\delta$) in trigonometric function values representing the rotation matrix, and when both sin $\delta$ and cos $\delta$ can be determined from a rotation matrix.

According to an embodiment, the step of determining at least one integer value from said look-up-table associated with said at least one trigonometric function value representing the rotation matrix comprises associating an integer value from the look-up table with each cosine or sine value in the trigonometric function values representing the rotation matrix when only one of cosine or sine value can be determined from a rotation matrix.

According to an embodiment, said at least one integer value associated with said at least one trigonometric function value representing the rotation matrix is entropy encoded to generate the bitstream.

The disclosure also concerns a method or device for decoding, from at least one bitstream, a rotation matrix comprising the steps of or the means for:

- decoding, from a bitstream, at least one integer value representing said rotation matrix,
- associating an integer value with at least one of number N trigonometric function values, each trigonometric function value being associated with an angle value,
- determining at least one trigonometric function value representing said rotation matrix to be associated with said at least one decoded integer value using said look-up-table,
- determining said rotation matrix from said at least one trigonometric function value.

According to an embodiment, the step of associating an integer value with at least one of number N trigonometric function values comprises building a look-up table associating an integer value with at least one of N trigonometric function values being determined for N angle values in a first range smaller than [0°;360°].

According to an embodiment, the first range is [0°;90°].

According to an embodiment, the number of integer values and associated trigonometric function values from the look-up table is increased by interpolation.

According to an embodiment, the N angle values are obtained by uniformly sampling said first range according to a sampling step.

In a variant, the N angle values are obtained by non-uniformly sampling said first range according to at least two sampling steps.

According to an embodiment, a first sampling step is used in a first sub-range of the first range and a second sampling step is used in a second sub-range of the first range.

According to an embodiment, the N trigonometric function values are sine values.

In a variant, the N trigonometric function values are cosine values.

According to an embodiment, the rotation matrix is a 2D rotation matrix.

According to an embodiment, said at least one trigonometric function value representing the 2D rotation matrix is a trigonometric function value of a rotation angle about a rotation axis perpendicular to one 2D plane.

According to an embodiment, the rotation matrix is a 3D rotation matrix.

According to an embodiment, the trigonometric function values representing the rotation matrix are determined through conversion of the 3D rotation matrix to Euler angles.

According to an embodiment, the trigonometric function values representing the 3D rotation matrix are the trigonometric function values of 3 Euler angles.

In a variant, the trigonometric function values representing the 3D rotation matrix are determined through conversion of the 3D rotation matrix to a quaternion.

The invention also relates to a signal carrying on at least one integer value associated with at least one trigonometric function value representing a rotation matrix.

According to an embodiment, the signal also carries on at least one sampling step.

The specific nature of the present principles as well as other objects, advantages, features and uses of the present principles will become evident from the following description of examples taken in conjunction with the accompanying drawings.

## 4. Brief Description of Drawings.

In the drawings, examples of the present principles are illustrated, in which:

- **Fig.1** shows schematically a diagram of the steps of the method for encoding a rotation matrix in accordance with an example of the present principles;
- **Fig. 2** shows a curve illustrating distortions of sine values in a first embodiment of the present principles;
- **Fig. 3** shows a curve illustrating distortions of sine values in a second embodiment of the present principles;
- **Fig. 4** shows schematically a diagram of the steps of the method for decoding, from at least one bitstream, a rotation matrix in accordance with an example of the present principles;
- **Fig. 5** shows an example of an architecture of a device in accordance with an example of present principles; and
- **Fig. 6** shows two remote devices communicating over a communication network in accordance with an example of present principles;
- **Fig. 7** shows the syntax of a signal in accordance with an example of present principles.

Similar or same elements are referenced with the same reference numbers.

## 5. Description of examples of the present principles.

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims.

While not explicitly described, the present examples and variants may be employed in any combination or sub-combination.

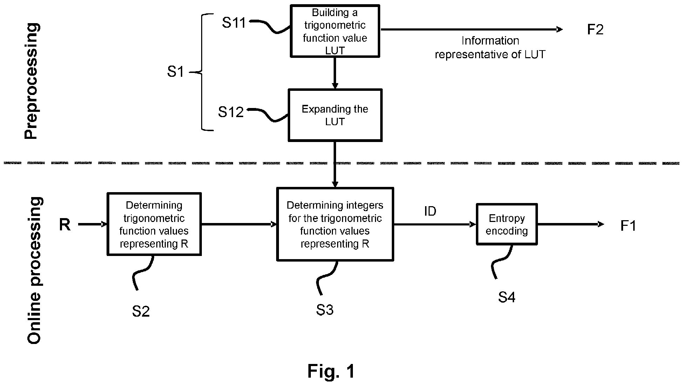

In reference to Figure 1, the present embodiment relates to a method for encoding a rotation matrix comprising the steps:

- step S1: associating an integer value with at least one of a number N of trigonometric function values,
- step S2: determining at least one trigonometric function value representing said rotation matrix,
- step S3: determining at least one integer value from said look-up-table associated with said at least one trigonometric function value representing said rotation matrix, and
- step S4: encoding said at least one integer value in order to generate a bitstream.

The step S1 may be performed during a preprocessing phase and the steps-S2-S4 may be performed online.

**Step S1: Associating integer values with N trigonometric functions (sine or cosine)**

The reconstruction of a rotation matrix needs to calculate the values of both sine and cosine functions. However, the values of sine function can be obtained from the values of cosine function as follows:

$$\sin\theta = \cos(\frac{\pi}{2} - \theta) \qquad \textbf{Equation 1}$$

Likewise the values of cosine function can be obtained from the values of sine function as follows:

$$\cos\theta = \sin(\frac{\pi}{2} - \theta) \qquad \textbf{Equation 2}$$

Therefore, only one LUT is needed to store all possible values of sine and cosine functions. Two embodiments to build a LUT for the values of sine function are described hereinafter. The same process can be used to build a LUT for the values of cosine function.

As sine function is periodic with a period of $2\pi$, we have

$$\sin \theta = \begin{cases} \sin \theta \, , if \, \theta \in [0, \frac{\pi}{2}] \\ \sin(\pi - \theta) \, , if \, \theta \in \left(\frac{\pi}{2}, \pi\right] \to (\pi - \theta) \in [0, \frac{\pi}{2}) \\ -\sin(\theta - \pi) \, , if \, \theta \in (\pi, \frac{3\pi}{2}] \to (\theta - \pi) \in (0, \frac{\pi}{2}] \\ -\sin(2\pi - \theta) \, , if \, \theta \in (\frac{3\pi}{2}, 2\pi) \to (2\pi - \theta) \in (0, \frac{\pi}{2}) \end{cases}$$

## Equation 3

Therefore, it is only needed to build a LUT for $\sin \theta \, , \theta \in [0, \frac{\pi}{2}].$

**According to a first embodiment,** in a sub-step S11, a LUT of $\sin \theta \, , \theta \in [0, \frac{\pi}{2}]$ is built using a uniformly sampling step $\Delta\theta$. A possible value is $\Delta\theta$ = 5 *degrees.* Then, the uniform sampled LUT for sin $\theta$ is as follows

**Table 1**

| LUT Index | $\theta$ in degree | sin $\theta$ | LUT Index | $\theta$ in degree | sin $\theta$ | LUT Index | $\theta$ in degree | sin $\theta$ |
|---|---|---|---|---|---|---|---|---|
| **0** | 0 | 0.0 | **9** | 45 | 0.707107 | **18** | 90 | 1.0 |
| **1** | 5 | 0.0871557 | **10** | 50 | 0.766044 | | | |
| **2** | 10 | 0.173648 | **11** | 55 | 0.819152 | | | |
| **3** | 15 | 0.258819 | **12** | 60 | 0.866025 | | | |
| **4** | 20 | 0.34202 | **13** | 65 | 0.906308 | | | |
| **5** | 25 | 0.422618 | **14** | 70 | 0.939693 | | | |
| **6** | 30 | 0.5 | **15** | 75 | 0.965926 | | | |
| **7** | 35 | 0.573576 | **16** | 80 | 0.984808 | | | |
| **8** | 40 | 0.642788 | **17** | 85 | 0.996195 | | | |

*LUT[i]* returns the value of the $i^{th}$ entry of LUT. In this example, the LUT comprises N=19 entries (19 indices i from 0 to 18) and N=19 outputs (19 sine values), with N= (90/ $\Delta\theta$)+1. The LUT comprises a limited number of sine values, one value every $\Delta\theta$ = 5 *degrees.*

According to an embodiment, this LUT is expanded in a sub-step S12 in order to accelerate step S3, especially when there a big amount of rotation matrices to be encoded.

In this expansion process, a sine value reconstructed using the LUT is computed for each integer value ID' $\in$ [0 ... 90'/$QP_\theta$] , by doing linear interpolation between two neighboring entries of LUT. The parameter $QP_\theta$ is a quantization step of angles in degrees. For example $QP_\theta$=0.5°.

For any integer ID' $\in$ [0 ... 90°/$QP_\theta$], a corresponding value of a sine function reconstructed using the LUT is determined by the ReconSine function as defined by the following **equation 4:**

$$ReconSine(ID') = LUT(ID') =$$
$$= \left( LUT\left[\left|\frac{\theta'''}{\Delta\theta}\right|\right] + (LUT\left[\left|\frac{\theta'''}{\Delta\theta}\right| + 1\right] - LUT\left[\left|\frac{\theta'''}{\Delta\theta}\right|\right]) * \frac{MOD(\theta''', \Delta\theta)}{\Delta\theta} \right)$$

where $\theta''' = ID'*QP_\theta$.

Note that LUT(N) returns the trigonometric value reconstructed using the LUT and the integer N, while LUT[NN] refers the NN-th entry of the LUT.

The formula $\left( LUT\left[\left[\frac{\theta'''}{\Delta\theta}\right]\right] + \left( LUT\left[\left[\frac{\theta'''}{\Delta\theta}\right] + 1\right] - LUT\left[\left[\frac{\theta'''}{\Delta\theta}\right]\right]\right) * \frac{MOD(\theta''',\Delta\theta)}{\Delta\theta} \right)$ is a piecewise linear interpolation for any angle $\theta''' \in [0° \dots 90°]$.

These trigonometric function values are computed only once for any ID' $\in [0 \dots 90/QP_\theta]$ and stored. Later on, in Step S3 they can be retrieved.

$\Delta\theta$, $QP_\theta$ and the sin $\theta$ values stored in the LUT are transmitted to the decoder side in a bit stream F2. Another embodiment is to only transmit $\Delta\theta$ and $QP_\theta$. The decoder calculates the sin $\theta$ values stored in the LUT based on $\Delta\theta$.

The drawback of the uniform sampled look-up table is that the distortion determined by

$$\Delta\sin(\theta) = \sin\theta - LUT\left( ID = \left\lfloor \frac{\theta}{QP_\theta} \right\rfloor \right)$$

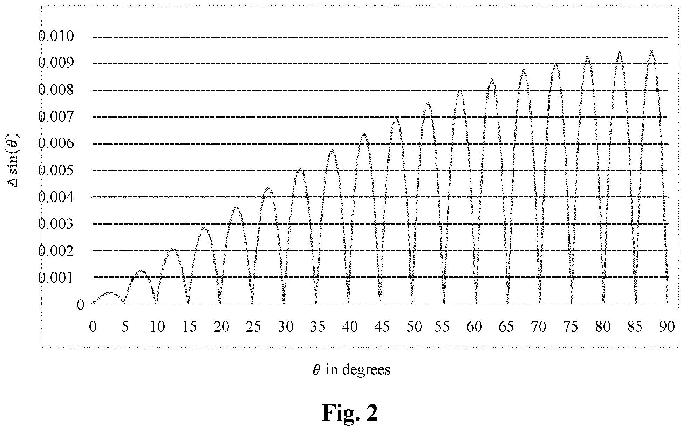

keeps increasing with the increasing of $\theta$, as shown in Figure 2. This causes coding artefacts. To achieve a quasi-uniform distortion, a non-uniform sampling step is preferred for the generation of the look-up table. Note that $\left\lfloor \frac{\theta}{\Delta\theta} \right\rfloor$ means the integer part of $\frac{\theta}{\Delta\theta}$

**According to a second embodiment,** in a sub-step S11, the LUT of sin $\theta$ is built using a non-uniformly sampling step $\Delta\theta$. One example of the non-uniform sampling step is

$$\Delta\theta = \begin{cases} \Delta\theta_1 = 6, & if \ \theta \in [0°, \theta_{Seg} = 30°] \\ \Delta\theta_2 = 4, & if \ \theta \in (\theta_{Seg}, 90°) \end{cases}.$$

Then the non-uniform sampled LUT for sin $\theta$ is as follows

**Table 2**

| LUT Index | $\theta$ in degree | sin $\theta$ | LUT Index | $\theta$ in degree | sin $\theta$ | LUT Index | $\theta$ in degree | sin $\theta$ |
|---|---|---|---|---|---|---|---|---|
| 0 | 0 | 0.0 | 9 | 46 | 0.71934 | 18 | 82 | 0.990268 |
| 1 | 6 | 0.104528 | 10 | 50 | 0.766044 | 19 | 86 | 0.997564 |
| 2 | 12 | 0.207912 | 11 | 54 | 0.809017 | 20 | 90 | 1 |
| 3 | 18 | 0.309017 | 12 | 58 | 0.848048 | | | |
| 4 | 24 | 0.406737 | 13 | 62 | 0.882948 | | | |
| 5 | 30 | 0.5 | 14 | 66 | 0.913545 | | | |
| 6 | 34 | 0.559193 | 15 | 70 | 0.939693 | | | |
| 7 | 38 | 0.615661 | 16 | 74 | 0.961262 | | | |
| 8 | 42 | 0.669131 | 17 | 78 | 0.978148 | | | |

In a sub-step S12, this LUT is expanded in order to accelerate step S3, especially when there a big amount of rotation matrices to be encoded.

In this second embodiment, for any integer ID' $\in [0 \dots 90°*QP_\theta]$, a corresponding value of sine function, reconstructed using LUT, is determined by ReconSine function as defined by the following **equation 5:**

$$ReconSine(ID') = LUT(ID')$$

$$= \begin{cases} \left( LUT\left[\left[\frac{\theta'''}{\Delta\theta_1}\right]\right] + \left( LUT\left[\left[\frac{\theta'''}{\Delta\theta_1}\right] + 1\right] - LUT\left[\left[\frac{\theta'''}{\Delta\theta_1}\right]\right]\right) * \frac{MOD(\theta''',\Delta\theta_1)}{\Delta\theta_1} \right), \theta''' \in [0°, \theta_{Seg}] \\ \left( LUT[ID_{Low}] + (LUT[ID_{Low} + 1] - LUT[ID_{Low}]) * \frac{\theta''' - \left\lfloor \frac{\theta''' - \theta_{Seg}}{\Delta\theta_2} \right\rfloor - \theta_{Seg}}{\Delta\theta_2} \right), \theta''' \in (\theta_{Seg}, 90°] \end{cases}$$

Where

- $\theta'''=ID'*QP_\theta$

- $\left\lfloor \dfrac{\theta'''}{\Delta\theta} \right\rfloor$ means the integer part of $\dfrac{\theta'''}{\Delta\theta}$

- $ID_{Low} = \left\lfloor \dfrac{\theta_{Seg}}{\Delta\theta_1} \right\rfloor + \left\lfloor \dfrac{\theta''' - \theta_{Seg}}{\Delta\theta_2} \right\rfloor$

These trigonometric function values are computed only once for any ID' $\in [0; 90*QP_{\theta}]$ and stored. Later on, they can be retrieved.

$\Delta\theta_1, \Delta_{\theta 2}, \theta_{Seg}, QP_{\theta}$ and the sin $\theta$ values of LUT are transmitted to the decoder side in the bit stream F2. Another embodiment is to only transmit $\Delta\theta_1, \Delta\theta_2, \theta_{Seg}$ and $QP_{\theta}$. The decoder calculates the sin $\theta$ values stored in the LUT based on $\Delta\theta_1, \Delta\theta_2$ and $\theta_{Seg}$.

$$\Delta\sin(\theta) = \sin\theta - LUT\left(ID' = \left\lfloor \frac{\theta}{QP_{\theta}} \right\rfloor\right)$$

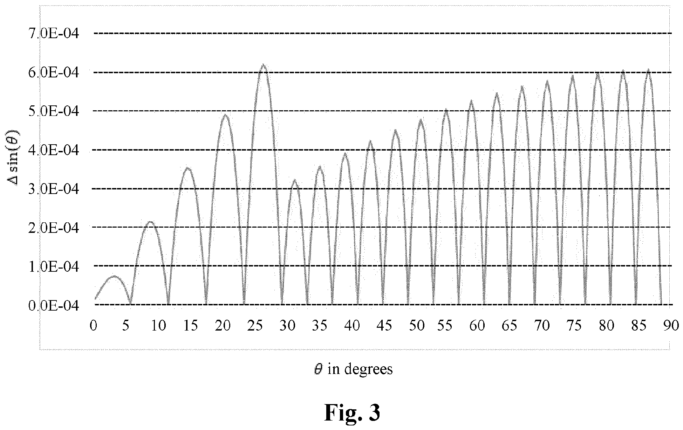

The resultant distortion is shown in Figure 3. This distortion is reduced versus the distortion of the first embodiment.

**Step S2: Determine trigonometric values representing the rotation matrix**

A 2D rotation matrix $R^{2D} = \begin{bmatrix} r_{00} & r_{01} \\ r_{10} & r_{11} \end{bmatrix}$ may be represented by

$$R^{2D} = \begin{bmatrix} \cos\gamma & -\sin\gamma \\ \sin\gamma & \cos\gamma \end{bmatrix}$$

Therefore, $R^{2D}$ may be described by a pair of trigonometric function values (sin $\gamma = r_{10}$, cos $\gamma = r_{00}$).

A 3D rotation matrix $R^{3D}$ may be represented by different sets of trigonometric values. The rotation matrix $R^{3D}$ may be represented by trigonometric values through converting $R^{3D}$ to Euler angles (first embodiment) or through converting $R^{3D}$ to a quaternion (second embodiment).

**According to a first embodiment,** the rotation matrix $R^{3D}$ is represented by trigonometric values through converting $R^{3D}$ to Euler angles

According to Euler's rotation theorem, any 3D rotation may be decomposed into 3 successive elemental rotations, i.e. rotations about the axes of a coordinate system. Therefore, any 3x3 rotation matrix can be described by three angles, which are called as Euler angles. There exist twelve possible sequences of rotation axes, divided in two groups:

- Proper Euler angles (*zxz, xyx, yzy, zyz, xzx, yxy*)
- Tait-Bryan angles (*xyz, yzx, zxy, xzy, zyx, yxz*).

Without loss of generality, XYZ is chosen hereinafter as the sequence of rotation axes. Then, the corresponding 3 elemental rotations are

1) The first rotation is by an Angle $\theta_X$ about the X-axis using rotation matrix

$$R_X = \begin{bmatrix} 1 & 0 & 0 \\ 0 & \cos\theta_X & -\sin\theta_X \\ 0 & \sin\theta_X & \cos\theta_X \end{bmatrix}$$

2) The second rotation is by an Angle $\theta_Y$ about the Y-axis using rotation matrix

$$R_Y = \begin{bmatrix} \cos\theta_Y & 0 & -\sin\theta_Y \\ 0 & 1 & 0 \\ \sin\theta_Y & 0 & \cos\theta_Y \end{bmatrix}$$

3) The third rotation is by an Angle $\theta_Z$ about the Z-axis using rotation matrix

$$R_Z = \begin{bmatrix} \cos\theta_Z & -\sin\theta_Z & 0 \\ \sin\theta_Z & \cos\theta_Z & 0 \\ 0 & 0 & 1 \end{bmatrix}$$

Then, a 3D rotation matrix $R^{3D} = \begin{bmatrix} r_{00} & r_{01} & r_{02} \\ r_{10} & r_{11} & r_{12} \\ r_{20} & r_{21} & r_{22} \end{bmatrix}$ can be written as

$$R^{3D} = R_Z R_Y R_X$$
$$= \begin{bmatrix} \cos\theta_Z\cos\theta_Y & \cos\theta_Z\sin\theta_Y\sin\theta_X - \sin\theta_Z\cos\theta_X & \cos\theta_Z\sin\theta_Y\cos\theta_X + \sin\theta_Z\sin\theta_X \\ \sin\theta_Z\cos\theta_Y & \sin\theta_Z\sin\theta_Y\sin\theta_X + \cos\theta_Z\cos\theta_X & \sin\theta_Z\sin\theta_Y\cos\theta_X - \cos\theta_Z\sin\theta_X \\ -\sin\theta_Y & \cos\theta_Y\sin\theta_X & \cos\theta_Y\cos\theta_X \end{bmatrix}$$

Therefore, the rotation matrix $R^{3D}$ can be described by 3 pairs of sine/cosine values:

$$\left(\sin\theta_Y = -r_{20}, \ \cos\theta_Y = \sqrt[2]{r_{21}^2 + r_{22}^2}\right),$$

$$\left(\sin\theta_X = \frac{r_{21}}{\sqrt[2]{r_{21}^2 + r_{22}^2}}, \ \cos\theta_X = \frac{r_{22}}{\sqrt[2]{r_{21}^2 + r_{22}^2}}\right), \text{ and}$$

$$\left(\sin\theta_Z = \frac{r_{10}}{\sqrt[2]{r_{21}^2 + r_{22}^2}}, \ \cos\theta_Z = \frac{r_{00}}{\sqrt[2]{r_{21}^2 + r_{22}^2}}\right).$$

Note that $\cos\theta_Y \geq 0$ because $\theta_Y \in [-\pi/2, \pi/2]$.

According to **a second embodiment,** the rotation matrix $R^{3D}$ is represented by trigonometric values through converting $R^{3D}$ to a quaternion.

$R^{3D}$ can also be represented by a unit quaternion Quatern(qw, qx, qy, qz) determined by **Equation 6**

$$qw = \sqrt[2]{1 + r_{00} + r_{11} + r_{22}}\Big/2 = \cos{\alpha}/2 \,,$$

$$qx = (r_{21} - r_{12})\Big/(4 * qw) = \sin{\alpha}/2 \cos\beta_x,$$

$$qy = (r_{02} - r_{20})\Big/(4 * qw) = \sin{\alpha}/2 \cos\beta_y,$$

$$qz = (r_{10} - r_{01})\Big/(4 * qw) = \sin{\alpha}/2 \cos\beta_z.$$

The rotation matrix $R^{3D}$ can thus be reconstructed from Quatern (qw, qx, qy, qz) by **Equation 7**

$$\begin{pmatrix} 1 - 2*qy^2 - 2*qz^2 & 2*qx*qy - 2*qz*qw & 2*qx*qz + 2*qy*qw \\ 2*qx*qy + 2*qz*qw & 1 - 2*qx^2 - 2*qz^2 & 2*qy*qz - 2*qx*qw \\ 2*qx*qz - 2*qy*qw & 2*qy*qz + 2*qx*qw & 1 - 2*qx^2 - 2*qy^2 \end{pmatrix}$$

Therefore, the rotation matrix $R^{3D}$ can be described by a pair of cosine/sine values and 3 cosine values:

$$\left(\cos \alpha/_2 = qw, \sin \alpha/_2 = \sqrt[2]{1 - qw^2}\right),$$

$$\cos \beta_x = \frac{qx}{\sqrt[2]{1 - qw^2}},$$

$$\cos \beta_y = \frac{qy}{\sqrt[2]{1 - qw^2}} \text{ and}$$

$$\cos \beta_z = \frac{qz}{\sqrt[2]{1 - qw^2}}.$$

**Step S3: Determine the integers representing the trigonometric values**

For a pair of trigonometric values (sin $\delta$, cos $\delta$) to be encoded, an integer $ID_\delta$ to be used as the query of the LUT built in step S1 for reconstructing (sin $\delta$, cos $\delta$) is determined as follows. Firstly, an integer $ID'_\delta$ is dertermined for |sin $\delta$|. If Step S12 is performed, $ID'_\delta$ is set as the integer value which minimizes ||sin$\delta$| - *ReconSine*(*ID*)|, *ID* $\in$ [0; 90*$QP_\theta$].

If Step S12 is not performed and LUT is built by uniform sampling, $ID'_\delta$ is determined as follows

$$ID'_\delta = INDEX_{Unif} * \Delta\theta/QP_\theta + \left\lfloor \frac{|\sin \delta| - LUT\left[INDEX_{Unif}\right]}{LUT\left[INDEX_{Unif}+1\right] - LUT\left[INDEX_{Unif}\right]} * \Delta\theta/QP_\theta \right\rfloor,$$

where $LUT[INDEX_{Unif}] \leq$ |sin $\delta$| *and* $LUT[INDEX_{unif}+1] \geq$ |sin $\delta$| **Equation 8.**

If Step S12 is not performed and LUT is built by non-uniform sampling, $ID'_\delta$ is determined as follows

$$ID'_\delta =$$
$$\begin{cases} INDEX_{NonUnif} * \frac{\Delta\theta_1}{QP_\theta} + \left\lfloor \frac{|\sin \delta| - LUT\left[INDEX_{NonUnif}\right]}{LUT\left[INDEX_{nonUnif}+1\right] - LUT\left[INDEX_{NonUnif}\right]} * \frac{\Delta\theta_1}{QP_\theta} \right\rfloor, \\ \qquad if\, INDEX_{NonUnif} < \theta_{Seg}/\Delta\theta_1 \\ \frac{\theta_{Seg}}{QP_\theta} + \left(INDEX_{NonUnif} - \frac{\theta_{Seg}}{\Delta\theta_1}\right) * \frac{\Delta\theta_2}{QP_\theta} + \left\lfloor \frac{|\sin \delta| - LUT\left[INDEX_{NonUnif}\right]}{LUT\left[INDEX_{NonUnif}+1\right] - LUT\left[INDEX_{NonUnif}\right]} * \frac{\Delta\theta_2}{QP_\theta} \right\rfloor, \\ \qquad if\, INDEX_{NonUnif} \geq \theta_{Seg}/\Delta\theta_1 \end{cases}$$

## Equation 9

where $LUT[INDEX_{NonUnif}] \leq$ |sin $\delta$| *and* $LUT[INDEX_{NonUnif}+1] \geq$ |sin $\delta$| .

Secondly, $ID_\delta$ is determind by

$$ID_\delta = \begin{cases} 0, if \sin \delta == 0.0\ and\ \cos \delta > 0.0, \\ ID'_\delta, if \sin \delta > 0.0\ and\ \cos \delta > 0.0, \\ 90/QP_\theta, \qquad if \sin \delta > 0.0\ and\ \cos \delta == 0.0, \\ ID'_\delta + 90/QP_\theta, \qquad if \sin \delta > 0.0\ and\ \cos \delta < 0.0, \\ 180/QP_\theta, \qquad if \sin \delta == 0.0\ and\ \cos \delta < 0.0, \\ ID'_\delta + 180/QP_\theta, \qquad if \sin \delta < 0.0\ and\ \cos \delta < 0.0, \\ 270/QP_\theta, \qquad if \sin \delta < 0.0\ and\ \cos \delta == 0, \\ ID'_\delta + 270/QP_\theta, \qquad if \sin \delta < 0.0\ and\ \cos \delta > 0.0. \end{cases}$$

## Equation 10

If only one trigonometric value is to be encoded, such as cos $\delta$, $ID_\delta$ is determined as follows.

Firstly, an integer $ID''_\delta$ is determined using $|\cos\delta|$. If Step S1.2 is performed, $ID''_\delta$ is set as the integer value which minimizes $||\cos\delta - ReconSine(ID)|$, $ID \in [0... 90/QP_\delta]$. If Step S12 is not preformed, $ID''_\delta$ is determined using Equation 8 and Equation 9 with $\sin\delta$ replaced by $\cos\delta$. Secondly, $ID_\delta$ is determined

$$ID_\delta = \begin{cases} ID''_\delta, & \text{if } \cos\delta > 0.0, \\ 0, & \text{if } \cos\delta == 0.0, \\ \dfrac{90}{QP_\theta} + ID''_\delta, & \text{if } \cos\delta < 0.0, \end{cases}$$

# Equation 11

For the 2D rotation case, the 2D rotation matrix $R^{2D}$ can be represented by one integer $ID_\gamma$ determined by Equation 10 with $\delta = \gamma$.

For the 3D rotation case, in the first embodiment, the 3D rotation matrix $R^{3D}$ can be represented by three integers $ID_{\theta_X}$, $ID_{\theta_Y}$ and $ID_{\theta_Z}$ determined by Equation with $\delta = \theta_X$, $\delta = \theta_Y$ and $\delta = \theta_Z$ respectively. In the second embodiment, the 3D rotation matrix $R^{3D}$ can be represented by four integers $ID_{\alpha/2}$, $ID_{\beta_X}$, $ID_{\beta_Y}$ and $ID_{\beta_Z}$ determined by Equation 10 with $\delta = \alpha/2$ and Equation 11 with $\delta = \theta_X$, $\delta = \theta_Y$ and $\delta = \theta_Z$ respectively.

### Step S4: Encoding of the integers ID

The integer values ID determined in step S3 are encoded into a bitstream F1. In an embodiment, the integer values ID are entropically encoded.

The bit stream F2 may be also entropically encoded.

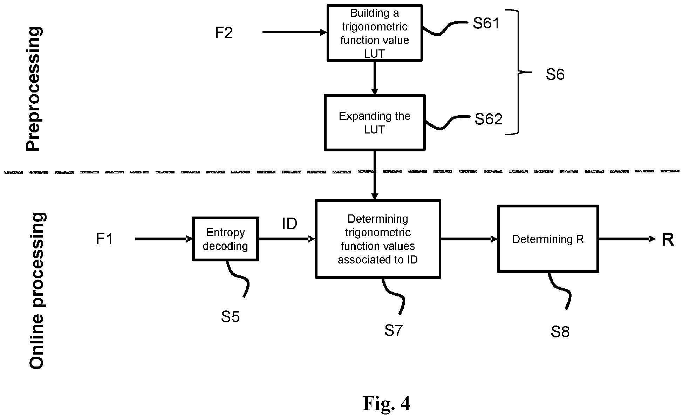

The decoding of the bit streams F1-F2 is then described in reference to Figure 4. The method for decoding comprises the following steps:

- **step S5:** decoding, from the bitstream F1, the integer values ID representing said rotation matrix (matrices); in this step, the bitstream F2 is also possibly decoded; it generates the integer values ID representing the rotation matrix R or multiple rotation matrices; it also generates possibly the LUT table;
- **step S6:** associating an integer value with each of a number N trigonometric function values at least from a look-up table; in this step, the look-up table LUT is reconstructed from the bit stream F2 (sub-step 61) Optionally, Step S62 is performed to pre-calculate the reconstructed trigonometric function values $ReconSine(ID')$ for any integer $ID' \in [0 ... 90°/QP_\delta]$ using equation 4 for the uniform sampling case or equation 5 for the non-uniform sampling case;

**step S7:** for an decoded integer value ID, determining the corresponding reconstructed sin and/or cos function values, ReconSine(ID) and ReconCosine(ID), representing the rotation matrix using ID and the look-up-table LUT constructed in step S6 as follows. If step S62 is not performed, LUT is built by uniform sampling and both *ReconSine(ID)* and *ReconCosine(ID)* needs to be determined, *ReconSine(ID)* and *ReconCosine(ID)* are determined by

$$ReconSine(ID) = \text{sign}(\theta''') * \left( LUT\left[\left|\frac{\theta'''}{\Delta\theta}\right|\right] + \left(LUT\left[\left|\frac{\theta'''}{\Delta\theta}\right| + 1\right] - LUT\left[\left|\frac{\theta'''}{\Delta\theta}\right|\right]\right) * \frac{MOD(\theta''', \Delta\theta)}{\Delta\theta}\right)$$

$$ReconCosine(ID) = \text{signcos}(\theta^{\prime\prime\prime})$$
$$* \left( LUT\left[\left[\frac{90^\circ - \theta^{\prime\prime\prime}}{\Delta\theta}\right]\right] + \left( LUT\left[\left[\frac{90^\circ - \theta^{\prime\prime\prime}}{\Delta\theta}\right] + 1\right]\right.$$
$$\left. - LUT\left[\left[\frac{90^\circ - \theta^{\prime\prime\prime}}{\Delta\theta}\right]\right]\right) * \frac{MOD\left(90^\circ - \theta^{\prime\prime\prime}, \Delta\theta\right)}{\Delta\theta}\right)$$

where

- $\theta'' = MOD(\theta', 360°)$ and $\theta'' \in [0,360°)$, where $MOD(x,y)$ is the modulo operator and $\theta' = ID*QP_\theta$;

- $\left[\left[\frac{\theta^{\prime\prime\prime}}{\Delta\theta}\right]\right]$ means the integer part of $\frac{\theta^{\prime\prime\prime}}{\Delta\theta}$

$$\theta^{\prime\prime\prime} = \begin{cases} \theta^{\prime\prime}, & if\, \theta^{\prime\prime} \in [0,90] \\ 180 - \theta^{\prime\prime}, & if\, \theta^{\prime\prime} \in (90,180] \\ \theta^{\prime\prime} - 180, & if\, \theta \in (180,270] \\ 360 - \theta^{\prime\prime}, & if\, \theta^{\prime\prime} \in (270,360) \end{cases}$$ and

- 
$$\text{sign}(\theta^{\prime\prime}) = \begin{cases} +1, & if\,\theta^{\prime\prime} \in [0°,90°] \\ +1, & if\,\theta^{\prime\prime} \in (90°,180°] \\ -1, & if\,\theta^{\prime\prime} \in (180°,270°] \\ -1, & if\,\theta^{\prime\prime} \in (270°,360°) \end{cases}$$

- 
$$\text{signcos}(\theta^{\prime\prime}) = \begin{cases} +1, & if\,\theta^{\prime\prime} \in [0°,90°] \\ -1, & if\,\theta^{\prime\prime} \in (90°,180°] \\ -1, & if\,\theta^{\prime\prime} \in (180°,270°] \\ +1, & if\,\theta^{\prime\prime} \in (270°,360°) \end{cases}.$$

- 

The formula $\left( LUT\left[\left[\frac{\theta^{\prime\prime\prime}}{\Delta\theta}\right]\right] + \left( LUT\left[\left[\frac{\theta^{\prime\prime\prime}}{\Delta\theta}\right] + 1\right] - LUT\left[\left[\frac{\theta^{\prime\prime\prime}}{\Delta\theta}\right]\right]\right) * \frac{MOD(\theta^{\prime\prime\prime},\Delta\theta)}{\Delta\theta}\right)$ is a piecewise linear interpolation for any angle $\theta^{\prime\prime\prime} \in [0°; 90°]$. And sign($\theta''$) sets the sign of sin $\theta$. And signcos($\theta''$) sets the sign of cos $\theta$.

If step S62 is not performed, LUT is built by uniform sampling and only $ReconCosine(ID)$ needs to be determined (when a rotation matrix is encoded by being converted to a quaternion), $ReconCosine(ID)$ are determined by

$$ReconCosine(ID) = \text{signcos1}(\theta_{Cos}^{\prime\prime}) * \left( LUT\left[\left[\frac{\theta_{Cos}^{\prime\prime\prime}}{\Delta\theta}\right]\right] + \left( LUT\left[\left[\frac{\theta_{Cos}^{\prime\prime\prime}}{\Delta\theta}\right] + 1\right] - \right.\right.$$
$$LUT\left[\left[\frac{\theta_{Cos}^{\prime\prime\prime}}{\Delta\theta}\right]\right]\right) * \frac{MOD(\theta_{Cos}^{\prime\prime\prime},\Delta\theta)}{\Delta\theta}\right)$$ where

- 
$$\theta_{Cos}^{\prime\prime} = \begin{cases} \theta_{Cos}', & if\, \theta_{Cos}' < 180^0 \\ 180^0, & if\, \theta_{Cos}' \geq 180^0 \end{cases}$$ and $\theta''_{Cos} \in [0,180°]$, where $\theta'_{Cos} = ID* QP_\theta$;

- $\left[\left[\frac{\theta_{Cos}^{\prime\prime\prime}}{\Delta\theta}\right]\right]$ means the integer part of $\frac{\theta_{Cos}^{\prime\prime\prime}}{\Delta\theta}$

- $\theta_{Cos}^{\prime\prime\prime} = \begin{cases} \theta_{Cos}^{\prime\prime}, & if\,\theta_{Cos}^{\prime\prime} \in [0°,90°] \\ \theta_{Cos}^{\prime\prime} - 90°, & if\,\theta_{Cos}^{\prime\prime} \in (90°,180°] \end{cases}$ and

- 
$$\text{signcos1}(\theta_{Cos}^{\prime\prime}) = \begin{cases} +1, & if\,\theta_{Cos}^{\prime\prime} \in [0°,90°] \\ -1, & if\,\theta_{Cos}^{\prime\prime} \in (90°,180°] \end{cases}$$

- 

If step S62 is not performed, LUT is built by non-uniform sampling, and both $ReconSine(ID)$ and $ReconCosine(ID)$

needs to be determined, *ReconSine(ID)* and *ReconCosine*(*ID*) are determined by

$$
\begin{aligned}
&ReconSine(ID) = \\
&= \begin{cases}
\text{sign}(\theta'') * \left( LUT\left[\left\lfloor\frac{\theta'''}{\Delta\theta_1}\right\rfloor\right] + \left( LUT\left[\left\lfloor\frac{\theta'''}{\Delta\theta_1}\right\rfloor + 1\right] - LUT\left[\left\lfloor\frac{\theta'''}{\Delta\theta_1}\right\rfloor\right]\right) * \frac{MOD(\theta''',\Delta\theta_1)}{\Delta\theta_1}\right), \theta''' \in [0°, \theta_{Seg}] \\[4ex]
\text{sign}(\theta'') * \left( LUT[ID_{Low}] + (LUT[ID_{Low}+1] - LUT[ID_{Low}]) * \dfrac{\theta''' - \left\lfloor\frac{\theta'''-\theta_{Seg}}{\Delta\theta_2}\right\rfloor - \theta_{Seg}}{\Delta\theta_2}\right), \theta''' \in (\theta_{Seg}, 90°]
\end{cases}
\end{aligned}
$$

$$
\begin{aligned}
&ReconCosine(ID) = \\
&= \begin{cases}
\text{signcos}(\theta'') * \left( LUT\left[\left\lfloor\frac{90°-\theta'''}{\Delta\theta_1}\right\rfloor\right] + \left( LUT\left[\left\lfloor\frac{90°-\theta'''}{\Delta\theta_1}\right\rfloor + 1\right] - LUT\left[\left\lfloor\frac{90°-\theta'''}{\Delta\theta_1}\right\rfloor\right]\right) * \frac{MOD(90°-\theta''',\Delta\theta_1)}{\Delta\theta_1}\right), \theta''' \in [90° - \theta_{Seg}, 90°] \\[4ex]
\text{signcos}(\theta'') * \left( LUT[ID_{LowCos}] + (LUT[ID_{LowCos}+1] - LUT[ID_{LowCos}]) * \dfrac{90°-\theta''' - \left\lfloor\frac{90°-\theta'''-\theta_{Seg}}{\Delta\theta_2}\right\rfloor - \theta_{Seg}}{\Delta\theta_2}\right), \theta''' \in [\theta_{Seg}, 90° - \theta_{Seg})
\end{cases}
\end{aligned}
$$

where

- $\theta''$ = MOD($\theta'$, 360°) and $\theta'' \in [0,360°)$, where *MOD*(*x,y*) is the modulo operator;
- $\left\lfloor\frac{\theta'''}{\Delta\theta}\right\rfloor$ means the integer part of $\frac{\theta'''}{\Delta\theta}$
- $ID_{Low} = \left\lfloor\frac{\theta_{Seg}}{\Delta\theta_1}\right\rfloor + \left\lfloor\frac{\theta'''-\theta_{Seg}}{\Delta\theta_2}\right\rfloor, ID_{LowCos} = \left\lfloor\frac{\theta_{Seg}}{\Delta\theta_1}\right\rfloor + \left\lfloor\frac{90°-\theta'''-\theta_{Seg}}{\Delta\theta_2}\right\rfloor$
- $\theta''' = \begin{cases} \theta'', if\ \theta'' \in [0,90] \\ 180 - \theta'', if\ \theta'' \in (90,180] \\ \theta'' - 180, if\ \theta \in (180,270] \\ 360 - \theta'', if\ \theta'' \in (270,360) \end{cases}$ and
- $\text{sign}(\theta'') = \begin{cases} +1, if\ \theta'' \in [0°,90°] \\ +1, if\ \theta'' \in (90°,180°] \\ -1, if\ \theta \in (180°,270°] \\ -1, if\ \theta'' \in (270°,360°) \end{cases}.$
- $\text{igncos}(\theta'') = \begin{cases} +1, if\ \theta'' \in [0°,90°] \\ -1, if\ \theta'' \in (90°,180°] \\ -1, if\ \theta'' \in (180°,270°] \\ +1, if\ \theta'' \in (270°,360°) \end{cases}$

If step S62 is not performed, LUT is built by non-uniform sampling and only *ReconCosine*(*ID*) needs to be determined (when a rotation matrix is encoded by being converted to a quaternion), *ReconCosine*(*ID*) are determined by

$$
\begin{aligned}
&ReconCosine\ (ID) = \\
&= \begin{cases}
\text{signcos1}(\theta''_{Cos}) * \left( LUT\left[\left\lfloor\frac{\theta'''_{Cos}}{\Delta\theta_1}\right\rfloor\right] + \left( LUT\left[\left\lfloor\frac{\theta'''_{Cos}}{\Delta\theta_1}\right\rfloor + 1\right] - LUT\left[\left\lfloor\frac{\theta'''_{Cos}}{\Delta\theta_1}\right\rfloor\right]\right) * \frac{MOD(\theta'''_{Cos},\Delta\theta_1)}{\Delta\theta_1}\right), \theta'''_{Cos} \in [0°, \theta_{Seg}] \\[4ex]
\text{signcos1}(\theta''_{Cos}) * \left( LUT[ID_{Low}] + (LUT[ID_{Low}+1] - LUT[ID_{Low}]) * \dfrac{\theta'''_{Cos} - \left\lfloor\frac{\theta'''_{Cos}-\theta_{Seg}}{\Delta\theta_2}\right\rfloor - \theta_{Seg}}{\Delta\theta_2}\right), \theta'''_{Cos} \in (\theta_{Seg}, 90°]
\end{cases}
\end{aligned}
$$

where

$$\theta''_{Cos} = \begin{cases} \theta'_{Cos}, if\ \theta'_{Cos} < 180° \\ 180°, if\ \theta'_{Cos} \geq 180° \end{cases}$$ and $\theta''_{Cos} \in [0,180°]$, where $\theta'_{Cos} = ID * QP_\theta$;

$\left\lfloor \dfrac{\theta'''_{Cos}}{\Delta\theta} \right\rfloor$ means the integer part of $\dfrac{\theta'''_{Cos}}{\Delta\theta}$,

$$ID_{Low} = \left\lfloor \frac{\theta_{Seg}}{\Delta\theta_1} \right\rfloor + \left\lfloor \frac{\theta'''_{Cos} - \theta_{Seg}}{\Delta\theta_2} \right\rfloor,$$

$$\theta'''_{Cos} = \begin{cases} \theta''_{Cos}, if\ \theta''_{Cos} \in [0°,90°] \\ \theta''_{Cos} - 90°, if\ \theta''_{Cos} \in (90°,180°] \end{cases}$$

$$signcos1(\theta''_{Cos}) = \begin{cases} +1, if\ \theta''_{Cos} \in [0°,90°] \\ -1, if\ \theta''_{Cos} \in (90°,180°] \end{cases}$$

If step S62 is performed and both *ReconSine(ID)* and *ReconCosine(ID)* needs to be determined, *ReconSine(ID)* and *ReconCosine(ID)* are determined by *ReconSine(ID)* = sign($\theta''$)*ReconSine(ID''')*

$$ReconCosine(ID) = signcos(\theta'') * ReconSine\left(\frac{90}{QP_\theta} - ID'''\right)$$ where

- $\theta'' = MOD(\theta', 360°)$ and $\theta'' \in [0,360°)$, where *MOD(x,y)* is the modulo operator and $\theta' = ID*QP_\theta$;

$$ID''' = \frac{\theta'''}{QP_\theta}, \quad \theta''' = \begin{cases} \theta'', if\ \theta'' \in [0,90] \\ 180 - \theta'', if\ \theta'' \in (90,180] \\ \theta'' - 180, if\ \theta \in (180,270] \\ 360 - \theta'', if\ \theta'' \in (270,360) \end{cases};$$

$$sign(\theta'') = \begin{cases} +1, if\ \theta'' \in [0°,90°] \\ +1, if\ \theta'' \in (90°,180°] \\ -1, if\ \theta'' \in (180°,270°] \\ -1, if\ \theta'' \in (270°,360°) \end{cases}$$ and

$$signcos(\theta'') = \begin{cases} +1, if\ \theta'' \in [0°,90°] \\ -1, if\ \theta'' \in (90°,180°] \\ -1, if\ \theta'' \in (180°,270°] \\ +1, if\ \theta'' \in (270°,360°) \end{cases}$$

If step S62 is performed and only *ReconCosine(ID)* needs to be determined (when a rotation matrix is encoded by being converted to a quaternion), *ReconCosine(ID)* are determined by *ReconCosine(ID)* = signcos1($\theta'''_{Cos}$)*ReconSine(ID'''$_{Cos}$)* where

$$\theta''_{Cos} = \begin{cases} \theta'_{Cos}, if\ \theta'_{Cos} < 180° \\ 180°, if\ \theta'_{Cos} \geq 180° \end{cases}$$ and $\theta''_{Cos} \in [0,180°]$, where $\theta'_{Cos} = ID* QP_\theta$;

$$ID'''_{Cos} = \frac{\theta'''_{Cos}}{QP_\theta}, \theta'''_{Cos} = \begin{cases} \theta''_{Cos}, if\ \theta''_{Cos} \in [0°,90°] \\ \theta''_{Cos} - 90°, if\ \theta''_{Cos} \in (90°,180°] \end{cases}$$ and

$$signcos1(\theta''_{Cos}) = \begin{cases} +1, if\ \theta''_{Cos} \in [0°,90°] \\ -1, if\ \theta''_{Cos} \in (90°,180°] \end{cases}$$

Note that if step S62 is performed, i.e. *ReconSine(ID')* for any integer ID' $\in[0 \ ...90°/QP_\theta]$ is pre-computed, the same method is used for determining ReconsCosine(ID) and / or ReconsSine(ID) for both LUTS built by uniform sampling or non-uniform sampling methods.

- **step S8:** determining said rotation matrix from said at least one trigonometric function value reconstructed by step S7.

Therefore, (sin $\gamma$, cos $\gamma$) is determined from $ID_\gamma$ and $R^{2D}$ is determined from (siny,cosy) using Equation 6.

In the first embodiment (3D rotation matrix is converted to 3 Euler angles), (sin $\theta_X$, cos$\theta_X$), (sin$\theta_Y$, cos$\theta_Y$) and (sin$\theta_Z$, cos$\theta_Z$) are determined from $ID_X$, $ID_Y$ and $ID_Z$, and $R^{3D}$ is determined from (sin $\theta_X$, cos $\theta_X$), (sin $\theta_Y$, cos $\theta_Y$) and (sin $\theta_Z$, cos $\theta_Z$) using Equation 7.

In the second embodiment (3D rotation matrix is converted to a quaternion), (cos $\alpha/2$, sin $\alpha/2$), cos $\beta_x$, cos $\beta_y$ and cos $\beta_z$ are determined from $ID\alpha/2$, $ID_{\beta X}$, $ID_{\beta Y}$ and $ID_{\beta Z}$, and $R^{3D}$ is determined from (cos $\alpha/2$, sin $\alpha/2$), cos $\beta_x$, cos $\beta_y$ and cos $\beta_z$ using Equation 8 and Equation 9.

The encoding and decoding schemes as described above allows for having a fast and accurate reconstruction of 2D/3D rotation matrix

On **Fig. 1-4,** the modules are functional units, which may or not be in relation with distinguishable physical units. For example, these modules or some of them may be brought together in a unique component or circuit, or contribute to functionalities of a software. *A contrario,* some modules may potentially be composed of separate physical entities. The apparatus which are compatible with the present principles are implemented using either pure hardware, for example using dedicated hardware such ASIC or FPGA or VLSI, respectively « Application Specific Integrated Circuit », « Field-Programmable Gate Array », « Very Large Scale Integration », or from several integrated electronic components embedded in a device or from a blend of hardware and software components.

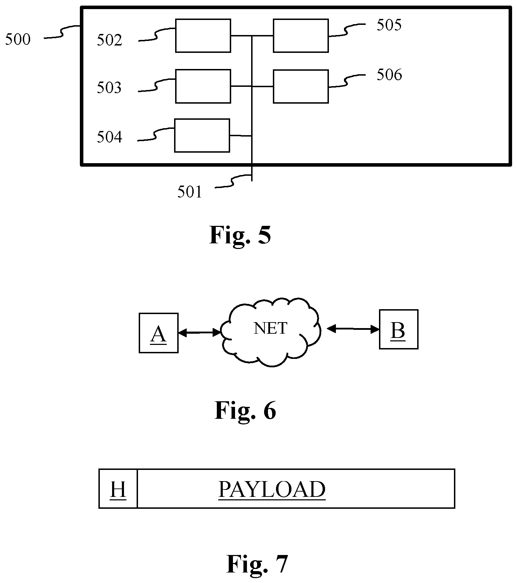

**Fig. 5** represents an exemplary architecture of a device 500 which may be configured to implement a method described in relation with **Fig. 1-4.**

Device 500 comprises following elements that are linked together by a data and address bus 501:

- a microprocessor 502 (or CPU), which is, for example, a DSP (or Digital Signal Processor);
- a ROM (or Read Only Memory) 503;
- a RAM (or Random Access Memory) 504;
- an I/O interface 505 for reception of data to transmit, from an application; and
- a battery 506.

In accordance with an example, the battery 506 is external to the device. In each of mentioned memory, the word « register » used in the specification can correspond to area of small capacity (some bits) or to very large area (e.g. a whole program or large amount of received or decoded data). The ROM 503 comprises at least a program and parameters. The ROM 503 may store algorithms and instructions to perform techniques in accordance with present principles. When switched on, the CPU 502 uploads the program in the RAM and executes the corresponding instructions.

RAM 504 comprises, in a register, the program executed by the CPU 502 and uploaded after switch on of the device 500, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

In accordance with an example of encoding or an encoder, the rotation matrix is obtained from a source. For example, the source belongs to a set comprising:

- a local memory (503 or 504), e.g. a video memory or a RAM (or Random Access Memory), a flash memory, a ROM (or Read Only Memory), a hard disk ;
- a storage interface (505), e.g. an interface with a mass storage, a RAM, a flash memory, a ROM, an optical disc or a magnetic support;
- a communication interface (505), e.g. a wireline interface (for example a bus interface, a wide area network interface, a local area network interface) or a wireless interface (such as a IEEE 802.11 interface or a Bluetooth® interface); and
- an image capturing circuit (e.g. a sensor such as, for example, a CCD (or Charge-Coupled Device) or CMOS (or Complementary Metal-Oxide-Sem iconductor)).

In accordance with an example of the decoding or a decoder, the decoded rotation matrix is sent to a destination; specifically, the destination belongs to a set comprising:

- a local memory (503 or 504), e.g. a video memory or a RAM, a flash memory, a hard disk ;
- a storage interface (505), e.g. an interface with a mass storage, a RAM, a flash memory, a ROM, an optical disc or a magnetic support;
- a communication interface (505), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, WiFi ® or a Bluetooth ® interface);
- a rendering device; and
- a display.

In accordance with examples of encoding or encoder, the bitstream F1-F2 are sent to a destination. As an example, at least one of bitstreams F1-F2 is stored in a local or remote memory, e.g. a video memory (504) or a RAM (504), a hard disk (503). In a variant, at least one of bitstreams is sent to a storage interface (505), e.g. an interface with a mass storage, a flash memory, ROM, an optical disc or a magnetic support and/or transmitted over a communication interface (505), e.g. an interface to a point to point link, a communication bus, a point to multipoint link or a broadcast network.

In accordance with examples of decoding or decoder, at least one of bitstreams F1-F2 is obtained from a source. Exemplarily, a bitstream is read from a local memory, e.g. a video memory (504), a RAM (504), a ROM (503), a flash memory (503) or a hard disk (503). In a variant, the bitstream is received from a storage interface (505), e.g. an interface with a mass storage, a RAM, a ROM, a flash memory, an optical disc or a magnetic support and/or received from a communication interface (505), e.g. an interface to a point to point link, a bus, a point to multipoint link or a broadcast network.

In accordance with examples, device 500 being configured to implement an encoding method described in relation with **Fig. 1,** belongs to a set comprising:

- a mobile device ;
- a smartphone or a TV set with 3D capture capability
- a communication device ;
- a game device ;
- a tablet (or tablet computer);
- a laptop ;
- a still image camera;
- a video camera ;
- an encoding chip;
- a still image server; and
- a video server (e.g. a broadcast server, a video-on-demand server or a web server).

In accordance with examples, device 500 being configured to implement a decoding method described in relation with **Fig. 4,** belongs to a set comprising:

- a mobile device ;
- a Head Mounted Display (HMD)
- (mixed reality) smartglasses
- an holographic device
- a communication device ;
- a game device ;
- a set top box;
- a TV set;
- a tablet (or tablet computer);
- a laptop ;
- a display
- a stereoscopic display and
- a decoding chip.

According to an example of the present principles, illustrated in **Fig. 6,** in a transmission context between two remote devices A and B over a communication network NET, the device A comprises a processor in relation with memory RAM and ROM which are configured to implement a method for encoding a rotation as described in relation with the **Fig.1** and the device B comprises a processor in relation with memory RAM and ROM which are configured to implement a method for decoding as described in relation with **Fig. 4.**

In accordance with an example, the network is a broadcast network, adapted to broadcast encoded rotation matrices from device A to decoding devices including the device B.

A signal, intended to be transmitted by the device A, carries at least one of bitstreams F1-F2.

Fig. 7 shows an example of the syntax of such a signal when the data are transmitted over a packet-based transmission protocol. Each transmitted packet P comprises a header H and a payload PAYLOAD.

According to embodiments, the payload PAYLOAD may comprise at least one of the following elements:

- the encoded integer values (bitstream F1); and/or
- sine or cosine values of the LUT and the quantization step(s) used for obtaining the LUT or cosine values of the LUT obtained by interpolation of the LUT and the quantization step(s) used for obtaining the LUT (bitstream F2).

Implementations of the various processes and features described herein may be embodied in a variety of different equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, a HMD, smart glasses, and any other device for processing an image or a video or other communication devices. As should be clear, the equipment may be mobile and even installed in a mobile vehicle.

Additionally, the methods may be implemented by instructions being performed by a processor, and such instructions (and/or data values produced by an implementation) may be stored on a computer readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described example of the present principles, or to carry as data the actual syntax-values written by a described example of the present principles. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. Method for encoding a rotation matrix comprising:

   - determining (S2) at least one trigonometric function value representing said rotation matrix,
   - associating (S1) an integer value (ID') with at least one of a number N of trigonometric function values by at least a look-up table, each trigonometric function value being associated with an angle value,
   - determining (S3) at least one of said integer values to be associated with said at least one trigonometric function value representing said rotation matrix,
   - encoding (S4) said at least one integer value in order to generate a bitstream.

2. Device for encoding a rotation matrix comprising means for:

   - determining (S2) at least one trigonometric function value representing said rotation matrix,
   - associating (S1) an integer value (ID') with at least one of a number N of trigonometric function values by at least a look-up table, each trigonometric function value being associated with an angle value,
   - determining (S3) at least one of said integer values to be associated with said at least one trigonometric function value representing said rotation matrix,
   - encoding (S4) said at least one integer value in order to generate a bitstream.

3. The method of claim 1 or the device of claim 2, wherein associating an integer value with at least one of a number N of trigonometric function values comprises building a look-up table associating an integer value with at least one of N trigonometric function values being determined for N angle values in a first range smaller than [0°;360°]

4. The method or the device of claim 3, wherein said N trigonometric function values are obtained by uniformly sampling said first range according to a sampling step ($\Delta\theta$).

5. The method or the device of claim 3, wherein said N trigonometric function values are obtained by non-uniformly sampling said first range according to at least two sampling steps ($\Delta\theta_1$, $\Delta\theta_2$) and wherein a first sampling step ($\Delta\theta_1$) is used in a first sub-range ([0°; $\theta_{Seg}$]) of the first range and a second sampling step ($\Delta\theta_2$) is used in a second sub-range ([$\theta_{Seg}$, 90°]) of the first range.

6. The method or the device of any one of claims 3-5, wherein the first range is [0°;90°].

7. The method of any one of claims 1 or 3-6 or the device of any one of claims 2-6, wherein the number of integer values and associated trigonometric function values is increased by interpolation.

8. The method or the device of any one of claims 3-7, wherein said N trigonometric function values are sine values or cosine values.

9. The method of any one of claims 1, 3-8 or the device of any one of claims 2-8, wherein the rotation matrix is a 2D rotation matrix and wherein said at least one trigonometric function value representing the 2D rotation matrix is a trigonometric function value of a rotation angle about a rotation axis perpendicular to one 2D plane.

10. The method of any one of claims 1, 3-8 or the device of any one of claims 2-8, wherein the rotation matrix is a 3D rotation matrix and the trigonometric function values representing the rotation matrix are determined through conversion of the 3D rotation matrix to Euler angles, the trigonometric function values representing the 3D rotation matrix being the trigonometric function values of 3 Euler angles.

11. The method of any one of claims 1, 3-8 or the device of any one of claims 2-8, wherein the rotation matrix is a 3D rotation matrix and the trigonometric function values representing the 3D rotation matrix are determined through conversion of the 3D rotation matrix to a quaternion.

12. The method of any one of claims 1, 3-11 or the device of any one of claims 2-11, wherein the step of or the means for determining (S3) at least one integer value associated with said at least one trigonometric function value representing the rotation matrix comprises:

    - associating an integer value from the look-up table with each couple [sin $\delta$, cos $\delta$] in trigonometric function

values representing the rotation matrix when both sin $\delta$ and cos $\delta$ can be determined from a rotation matrix, and/or
- associating an integer value from the look-up table to each cosine or sine value in the trigonometric function values representing the rotation matrix when only one of cosine or sine value can be determined from a rotation matrix.

13. Method for decoding, from at least one bitstream, a rotation matrix comprising:

- decoding (S5), from a bitstream, at least one integer value representing said rotation matrix,
- associating (S6) an integer value with at least one of a number N of trigonometric function values by at least a look-up table, each trigonometric function value being associated with an angle value,
- determining (S7) at least one trigonometric function value representing said rotation matrix to be associated with said at least one decoded integer value using said look-up table, and
- determining (S8) said rotation matrix from said at least one trigonometric function value.

14. Device for decoding, from at least one bitstream, a rotation matrix comprising means for:

- decoding (S5), from a bitstream, at least one integer value representing said rotation matrix,
- associating (S6) an integer value with at least one of a number N of trigonometric function values by at least a look-up table, each trigonometric function value being associated with an angle value,
- determining (S7) at least one trigonometric function value representing said rotation matrix to be associated with said at least one decoded integer value using said look-up table, and
- determining (S8) said rotation matrix from said at least one trigonometric function value.

15. A signal carrying on at least one integer value associated with at least one trigonometric function value representing a rotation matrix.

**Preprocessing**

S11 — Building a trigonometric function value LUT

Information representative of LUT → F2

S1

S12 — Expanding the LUT

**Online processing**

R → Determining trigonometric function values representing R

S2

Determining integers for the trigonometric function values representing R

S3

ID → Entropy encoding → F1

S4

**Fig. 1**

$\theta$ in degrees

**Fig. 2**

Fig. 3

**Preprocessing**

F2 → | Building a trigonometric function value LUT | — S61 ⎤
                                                          ⎬ S6
        | Expanding the LUT | — S62 ⎦

**Online processing**

F1 → | Entropy decoding | —ID→ | Determining trigonometric function values associated to ID | → | Determining R | → **R**

S5                  S7                  S8

**Fig. 4**

**Fig. 5**

**Fig. 6**

| H | PAYLOAD |
|---|---------|

**Fig. 7**

Europäisches
Patentamt

European
Patent Office

Office européen
des brevets

# EUROPEAN SEARCH REPORT

Application Number

EP 17 30 6424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YOON, DOE HYUN & YEH, MICHAEL: "A Look-up Table Based Adaptive Reversible Multiplication-free Transform", Standford University IMAGE AND VIDEO COMPRESSION-EE398, 1 March 2006 (2006-03-01), pages 1-8, XP002779621, Retrieved from the Internet: URL:http://ivms.stanford.edu/~varodayan/teaching.html [retrieved on 2018-03-27] * the whole document * | 1-15 | INV. G06T9/00 |
| X | CN 105 719 242 A (GUANGZHOU SAMPLEX ELECTRONIC TECH CO LTD) 29 June 2016 (2016-06-29) * abstract * | 1-15 | |
| X | US 2014/010284 A1 (HONG YOON-MI [KR] ET AL) 9 January 2014 (2014-01-09) * the whole document * | 1-15 | |
| | | | TECHNICAL FIELDS SEARCHED (IPC) |
| | | | G06T |

The present search report has been drawn up for all claims

| Place of search | Date of completion of the search | Examiner |
|---|---|---|
| Berlin | 27 March 2018 | Kulak, Eray |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 6424

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2018

| Patent document cited in search report | | Publication date | Patent family member(s) | | Publication date |
|---|---|---|---|---|---|
| CN 105719242 | A | 29-06-2016 | NONE | | |
| US 2014010284 | A1 | 09-01-2014 | KR 20120098500 | A | 05-09-2012 |
| | | | US 2014010284 | A1 | 09-01-2014 |
| | | | WO 2012115487 | A2 | 30-08-2012 |

EPO FORM P0459

For more details about this annex : see Official Journal of the European Patent Office, No. 12/82